# EUROPEAN PATENT SPECIFICATION

(11) **EP 2 352 927 B1**
(45) Date of publication and mention of the grant of the patent: **10.04.2013**
(21) Application number: 09751992.0
(22) Date of filing: 06.11.2009
(51) Int. Cl.: F16B 13/08, F16B 37/04

(54) **FASTENING DEVICE**
BEFESTIGUNGSVORRICHTUNG
DISPOSITIF DE FIXATION

(30) Priority: 07.11.2008 NL 2002187
(43) Date of publication of application: 10.08.2011
(73) Proprietor: Bm Constructies B.v., 6673 DM Andelst (NL)
(72) Inventor: BOLT, Johannes Jacobus, NL-6673 DM Andelst (NL)
(74) Representative: Ketelaars, Maarten F.J.M.
(86) International application number: PCT/NL2009/050672
(87) International publication number: WO 2010/053366

(56) References cited:
- JP-U- 51 012 857
- US-A1- 2002 154 965
- US-A1- 2008 253 860

## Description

### Background of the invention

The invention relates to a fastening device for attaching a constructional part or else a fastening means, in particular for attaching a fastening means to a place which is difficult to reach, more particularly for providing a wall part of a carrying beam, such as a chassis beam, with an internal screw thread in order to fasten-in a bolt.

A fastening element is known from DE 19704902 Cl for fastening a threaded end in a C-shaped profile. A drawback of the known fastening element is the fact that fastening operates counter to a spring force; this also necessitates the carrying-out of a multiple movement, that is to say pressing and afterwards turning of the fastening element. After attaching the fastening element, it is necessary to attach a nut to the threaded end in order to connect the fastening element itself to the C-shaped profile. In this case, the axis of the threaded end coincides with the axis about which the fastening element as a whole turns. This is not robust and makes a fastening element prone to failure.

US 2002154965 A1 discloses an assembly with a nut for fastening a body to a part, the back of which is difficult to reach manually. The nut is held tiltably in the frame. A drawback of this known assembly is the fact that it is not always possible to precisely control the position of the nut because the nut can tilt and slide freely with respect to the frame. Furthermore, it is also not possible to precisely control the position of the assembly with respect to the part during use of the assembly.

JP 51012857 U appears to disclose a fastening element in which a threaded part is tiltable between a first position in which the fastening element fits through a recess in a wall and a second position in which the fastening element can be connected to the wall. A drawback of this known assembly is the fact that it is not always possible to precisely control the position of the threaded part because the nut can tilt and/or slide freely. Furthermore, the fastening element appears complex in use.

An assembly for anchoring a fastening element is known from US 2008253860 A1.

The assembly consists of a strap, a resilient part, a crosspiece rotatably mounted on the strap, and a closing part which can slide along the strap. The crosspiece is tiltable between a first position in which the assembly fits through a recess in a wall and a second position in which the assembly can be connected to the wall. A drawback of this known assembly is the fact that it is not always possible to precisely control the position of the crosspiece because the crosspiece can tilt freely with respect to the strap. A further drawback is the fact that the feeding of the assembly through the recess is impeded as a result of the fact that the resilient part presses the crosspiece in the direction of the second position. Furthermore, it is only possible to precisely control the position of the assembly with respect to the wall during use of the assembly after the strap is braced by means of the closing part. This complicates the assembly per se and the use thereof.

### Summary of the invention

An object of the invention is to provide a fastening device which completely or at least partially solves a problem in the prior art.

A further object of the invention is to provide an alternative to a fastening device from the prior art.

The invention provides for this purpose a fastening device for providing a wall part of a carrying beam, such as a chassis beam, with an internal screw thread in order to fasten-in a bolt, wherein the fastening device comprises the features of claim 1. The fastening device according to the invention is advantageous because the device allows a screw hole to be formed at a place which is difficult to reach, for example in through a slotted hole in a chassis beam, wherein, after forming the screw hole, the fastening device cannot be reached or is very difficult to reach. The parallel projection of the fastening means along the screw axis of the screw hole is in this case greater than the slotted hole, while the smallest parallel projection of the fastening means in a direction perpendicular to the screw axis is equal to or less than the slotted hole.

The term "screw axis" refers to the axis or else centre line of the screw hole.

In an embodiment of a fastening device according to the invention, the height of the fastening means is less than the length of the fastening means. This embodiment is advantageous because it allows the fastening device to be brought through a relatively large hole within the circumference of a chassis beam, while at the same time providing thereafter a broad overlap between the fastening means and a wall of the chassis beam, allowing loads acting on the fastening device to be effectively transmitted to the chassis beam.

In an embodiment of a fastening device according to the invention, the carrying plate comprises a supporting surface for acting on a wall part of a carrying beam, such as a chassis beam, the supporting surface extending substantially perpendicularly from the screw axis over a length which is greater than the height of the fastening means. This allows loads acting on the fastening device to be transmitted all the more effectively to the chassis beam.

According to the invention, the fastening means is movable between a first position remote from the recess and a second position close to the recess, and between an introduction stance for feeding the fastening means through a slitted hole in a wall part of a carrying beam and past the wall part, and a fastening stance, wherein, in the fastening stance, the screw hole faces the recess in the base plate for fastening a bolt in the screw hole and the carrying plate faces the base plate for receiving and clamping a wall part of a carrying beam between the carrying plate and the base plate. This allows optimum use to be made of the dimensions of the fastening means because it is made possible to feed the fastening means, in a stance having a small frontal area, through a slitted hole in a wall part of a carrying beam and to transmit, after bringing the fastening means into a stance having a larger frontal area, loads to the carrying beam.

In an embodiment of a fastening device according to the invention, the fastening means is tiltable about a tilt axis between an introduction stance and a fastening stance. This makes the movement of the fastening means more controlled and robust; this is very important because the fastening means cannot be reached or is very awkward to reach during and after movement.

In an embodiment of a fastening device according to the invention, the fastening means is tiltable, in the first position, between the introduction stance and the fastening stance. This is advantageous because the fastening means is more free to tilt in the first position.

In an embodiment of a fastening device according to the invention, the tilt axis lies substantially perpendicularly to the screw axis of the screw hole. This is advantageous because tilting of the fastening means is in this case substantially independent of possible loads acting on the screw hole about the screw axis during the attaching of a bolt. This makes the fastening device robust and even more suitable for rapid and simple attachment, for example in a mass production process.

In an embodiment of a fastening device according to the invention, the introduction stance is substantially perpendicular to the fastening stance. This optimizes still further the use of the dimensions and thus the material usage of the fastening means.

In an embodiment of a fastening device according to the invention, the screw axis of the screw hole extends substantially perpendicularly to the longitudinal direction of the carrying plate and the fastening means is movable between an introduction stance and a fastening stance, wherein, in the introduction stance, the fastening means extends substantially perpendicularly to the base plate for feeding the fastening means through a recess, such as a slitted hole, in a wall part of a carrying beam and past the wall part and wherein, in the fastening stance, the fastening means extends substantially parallel to the base plate for receiving and clamping a wall part of a carrying beam between the carrying plate and the base plate and wherein, in the fastening stance, the screw hole faces the recess in the base plate for fastening a bolt in the screw hole.

According to the invention, the fastening means comprises a spring for bracing the fastening means in the first position in a desired stance, preferably the introduction stance. This makes the fastening device even more suitable for use and a mass production process because the fastening means is held in a robust manner in a predictable stance.

According to the invention, the spring has a line of action and the spring is connected to the fastening means in such a way that the line of action tilts along with the fastening means around the tilt axis in order to brace the fastening means in the fastening stance. This is advantageous because the fastening means is now held in a predictable stance and/or position using one spring.

In an embodiment of a fastening device according to the invention, the line of action of the spring substantially coincides with the screw axis of the screw hole. This provides an advantageous central and space-saving arrangement of the spring.

In an embodiment of a fastening device according to the invention, the fastening device is provided with an operating device for moving the fastening means. The operating device allows the tilting of the fastening means to be automated more extensively during use of the fastening device.

The invention further relates to an accessory provided with a fastening device according to the invention, for fastening the accessory to a vehicle, specifically the bodywork, more specifically the chassis, even more specifically a chassis beam, preferably a wall part of a chassis beam. The accessory is for example a footboard, a decorative bar, etc. The accessory provided with one or more fastening devices is advantageous because the accessory can be fastened very simply and rapidly to a chassis beam.

The invention further relates to a method for manufacturing a fastening device according to the invention, wherein the method includes:
- moving the fastening means from the second position close to the recess in the base plate to the first position remote from the recess and afterwards
- tilting the fastening means about the tilt axis from the fastening stance to the introduction stance.

This method is advantageous because this merely requires simple movements, use also being made again of guides in the fastening device itself, more specifically in the uprights and the fastening means.

### Brief description of the figures

Various embodiments of a fastening device according to the invention are represented in the enclosed figures, in which:
Fig. 1a is a perspective view of a fastening device according to the invention in an introduction stance;
Fig. 1b shows the fastening device from Fig. 1a in a fastening stance;
Fig. 2a is a side view of the fastening device in an introduction stance;
Fig. 2b is a side view of the fastening device in a fastening stance;
Fig. 3 is a perspective view of a detail of a fastening device according to the invention;
Fig. 4a shows a further example of a fastening device not forming part of invention; and
Fig. 4b shows an operating device of the fastening device from Fig. 4a.

### Description of embodiments

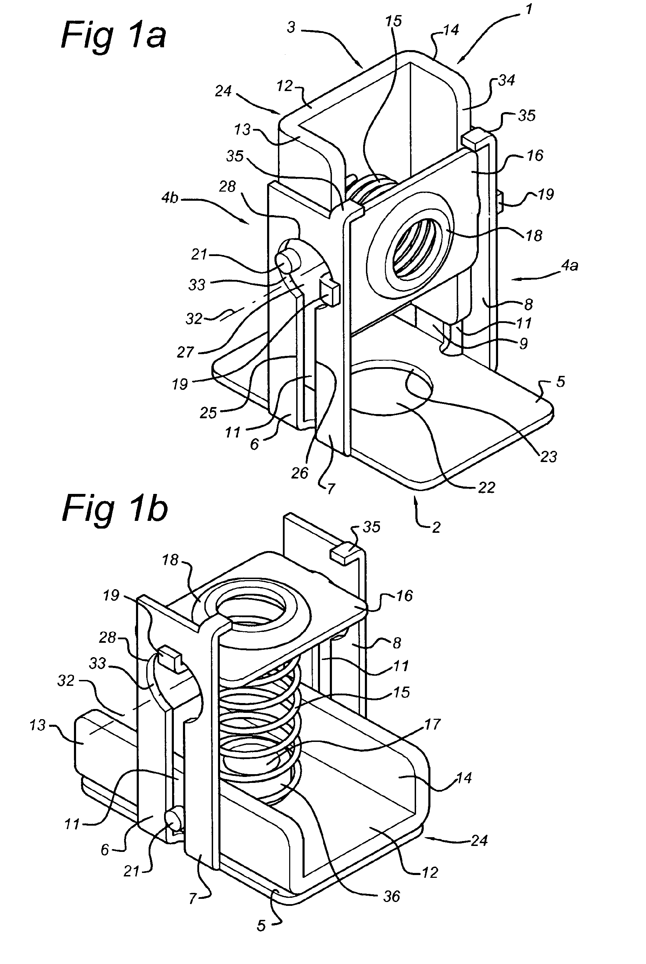

Fig. 1a and 1b are perspective views of an embodiment of a fastening device 1 according to the invention in various stances. The fastening device 1 consists in this case of a frame 2 and a fastening means 3. The frame 2 consists in this case of a base plate 5 and two uprights 4a, 4b, although one upright 4a, 4b is also conceivable. The base plate 5 extends in an imaginary plane. The uprights 4a, 4b extend in this case perpendicularly from the base plate 5. The base plate 5 is provided, between the uprights, with a recess 22. The recess 22 is in this case provided centrally between the uprights 4a, 4b. The recess 22 is bounded by a circumference 23. The circumference 23 is in this case circular but other shapes are conceivable. The frame 2 is in this case made of stainless sheet steel using punching and bending operations but other materials and operations are also conceivable such as galvanized sheet, plastics material and the like.

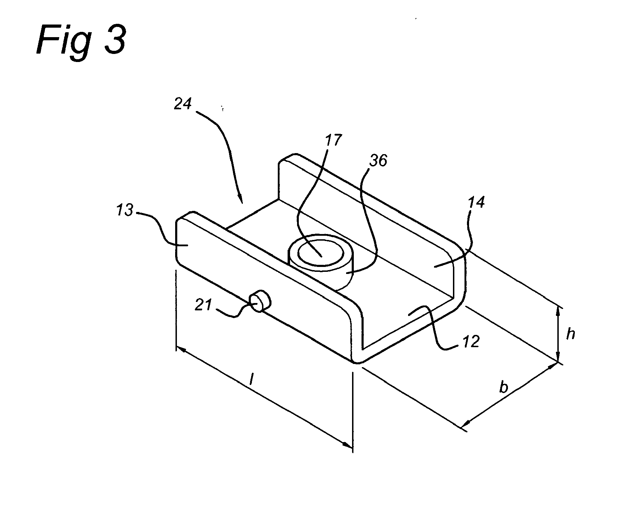

The fastening means 3 comprises a U-shaped profile 24. The U-shaped profile 24 will be described hereinafter with reference to Fig. 3. The fastening means 3 is movably connected to the frame 2. The fastening means 3 is in this case movably connected to the frame 2 by means of the uprights 4a, 4b. The fastening means 3 is in this case accommodated between the uprights 4a, 4b. The fastening means 3 is movable between a first position, such as in Fig. 1a, and a second position shown in Fig. 1b. The first position of the fastening means 3 is furthest away from the recess 22. The fastening means 3 is held in the first position by that end of the uprights 4a, 4b that is remote from the base plate 5. The fastening means 3 is held in the second position by the end of the uprights 4a, 4b close to the base plate 5. For moving the fastening means 3 with respect to the frame 2, the fastening device 1 is provided with guide means for guiding the fastening means 3. These guide means are in this case provided on the uprights 4a, 4b and on the fastening means 3. An upright 4a, 4b is provided with a slot 11, in this case between two upright parts 6, 7 and in this case also between two upright parts 8, 9. The slot 11 is bounded by guide surfaces 25, 26. The fastening means 3 comprises a guide cam 21, in this case provided on the U-shaped profile 24, more specifically on the side of a leg 13, 14 that faces an upright 4a, 4b. The cam 21 is in this case embodied in a cylindrical manner but other shapes are conceivable. The cam 21 interacts with the slot 11 and the guide surfaces 25, 26 for guiding, with respect to the frame 2, the fastening means 3 between the first and the second position.

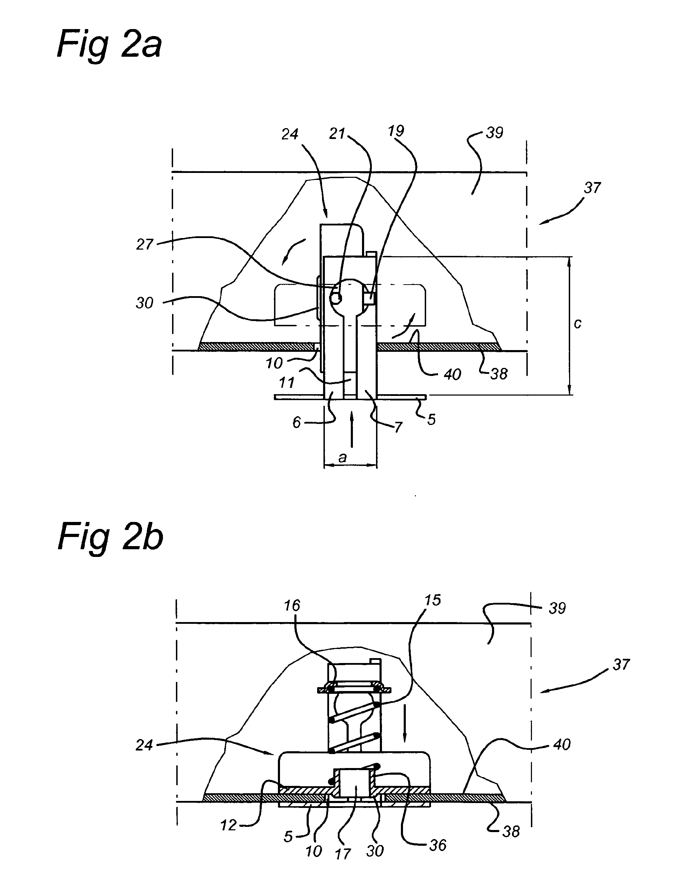

In the first position, the fastening means 3 is tiltably connected to the frame 2, specifically to an upright 4a, 4b, more specifically to that end of an upright 4a, 4b that is remote from the base plate 5. The fastening means 3 is tiltable about a tilt axis 32. For this purpose, an upright 4a, 4b is provided with an opening 27 bounded by a circular circumference 28 around the tilt axis 32. The cam 21 and the hook 19 or crest 19 engage with the opening 27 and guide the fastening means 3 during the tilting around the tilt axis 32. The cam 21 rests in this case on the bearing surface 33. The fastening means 3 is tiltable, in the first position, between an introduction stance from Fig. 2a and a fastening stance schematically represented by means of a broken line in Fig. 2a and also represented in Fig. 2b. In the introduction stance, the screw hole 17 is remote (faces away) from the recess 22 in the base plate 5; the smallest circumference of the fastening means 3 faces the recess 22 in this case. In an embodiment, the introduction stance is by stop cams 35 which are provided on the uprights 4a, 4b. The stop cams 35 act in this case on the legs 13, 14 of the U-shaped profile 24. In the fastening stance, the screw hole 17 faces the recess 22 in the base plate 5; preferably, the screw axis lies in this case perpendicularly to the base plate 5. Preferably, the introduction stance is perpendicular to the fastening stance. The opening 27 in an upright 4a, 4b is connected to the slot 11, allowing the cam 21 to guide the fastening means 3 during the tilting between the introduction stance and the fastening stance and to guide during the movement between the first and the second position. The slot 11 and the opening 17 are arranged relative to each other in such a way that the fastening means 3 is movable, in the fastening stance, between the first and the second position.

The fastening means 3 comprises, in a further embodiment, a closing plate 16 and a spring 15. This spring 15 is in this case accommodated between the U-shaped profile 24 and the closing plate 16; preferably, the spring is accommodated between the carrying plate 12 and the closing plate 16. The spring 15 braces the fastening means 3 in the opening 27; this is advantageous because a desired stance of the fastening means 3 with respect to the frame is in this case maintained. The closing plate 16 extends between the two uprights 4a, 4b opposite the U-shaped profile 24, specifically at the rim of the legs 13, 14 of the U-shaped profile 24. The closing plate 16 is connected to the U-shaped profile by means of the spring 15. The closing plate 16 is in this case provided with a bowl 18 which fixes the spring with respect to the closing plate 16. Preferably, the closing plate 16 abuts on the legs 13, 14 of the U-shaped profile 24; this provides robust tilting of the fastening means 3. Robust tilting is very important because the fastening means 3 cannot be accessed or is very awkward to access after introduction into a chassis beam and tilting. During the abutting of the closing plate 16 on the legs 13, 14, the hooks 19 are preferably provided on the closing plate 16, as a result of which these hooks 19 both guide the fastening means 3 during the tilting about the tilt axis 32 and position the tilting plate 16 with respect to the frame 2. A further advantage of this is the fact that, during tilting from the introduction stance to the fastening stance of the fastening means 3, cams 21 and hooks 19 interact and the cams 21 then guide the U-shaped profile toward the second stance. The cam 21 is in this case preferably embodied as the single cam 21 shown; this gives the U-shaped profile, in the second position, a certain freedom to tilt in order to be able to be directed optimally toward a wall part between the base plate 5 and the carrying plate 12.

Fig. 2a is a side view of the fastening device 3 in an introduction stance and Fig. 2b is a sectional side view of the fastening device 3 in a fastening stance. The two figures show in this case a partly cut away view of a chassis beam 37, in this case a box profile with side walls 39 and a bottom wall part 38 which is clamped between the base plate 5 and the carrying plate 12. The supporting surface 12 of the U-shaped profile 24 rests in this case on the inner circumference 40 of the wall part 38. The fastening device 1 is brought within the circumference of the chassis beam 37 via a recess 10. The recess 10 may be a hole 10, a slot, a slotted hole, a slitted hole, etc. The recess 10 is in this case a slot 10 against which the uprights 4a, 4b abut for rotationally locking the fastening device 1 with the chassis beam 37 with regard to rotations in the plane of the slot 10. The width a of the upright 4a, 4b corresponds in this case to the width of the slot. The height c of the upright 4a, 4b is in this case such that the U-shaped profile 24 can tilt freely within the circumference of the chassis beam 37. The fastening means 3 is in this case further provided with a peripheral run-in edge 30 around the screw hole 17. It is advantageous if the outer circumference of the uprights 4a, 4b close to the base plate 5 corresponds to the circumference of the slotted hole 10 so that the fastening device with the chassis beam 37 is locked with regard to rotations in the plane of the slot 10.

Fig. 3 is a perspective view of a U-shaped profile 24 of a fastening device 1 according to the invention. The two legs 13, 14 of the U-shaped profile 24 serve to position and to guide the U-shaped profile 24 with respect to the frame 2 from Fig. 1a. The legs 13, 14 are each provided with a positioning cam 21 which serves both to position and to guide the U-shaped profile 24 with respect to the frame 2 from Figure 1a. The positioning cam 21 is in this case a cylindrical cam 12, other shapes also being conceivable. The connecting piece 12, also the carrying plate 12, extends between the two legs 13, 14. The height h of the legs 13, 14 is less than the length 1 of the U-shaped profile. This allows the U-shaped profile to be fed through an opening, for example a slitted hole (not shown) in a chassis beam, and then the U-shaped profile 24 to be tilted in order to make the carrying plate 12 face the slitted hole and preferably to centre the screw hole 17 with the slitted hole. After tilting of the U-shaped profile 24, the legs 13, 14 point away from the slitted hole. The ratio of the height h of the legs 13, 14 and the length 1 of the U-shaped profile 24 allows the U-shaped profile to be brought within the circumference of a chassis beam and the U-shaped profile then to be used as a fastening element. The U-shaped profile 24 is in this case passed through a slot (not shown) in the wall of a chassis beam. The slot has in this case at least the dimension b times h and is smaller than b times 1 so that the U-shaped profile can rest on the wall of the chassis beam. The U-shaped profile 24 is provided with a screw hole 17 having a screw axis. The screw hole 17 is in this case centrally provided in the U-shaped profile 24. The screw hole 17 is in this case centrally provided in the carrying plate 12. The screw axis extends in this case perpendicularly from the carrying plate 12. The screw hole 17 is in this case formed in the carrying plate 12 by means of an insert or insertion part and connected to the carrying plate 12 by means of a press fit and/or a welding process. The screw hole 17 can also be formed by means of flow-drilling or punching; an advantage of this is the fact that the bush 36 or outer circumference 36 is jointly formed in one operation. Thread is then attached in the bush 36 by means of roll tapping or thread tapping. The screw hole is connected to the U-shaped profile in such a way that it is possible to attach an M10 bolt having a tightening moment of 45 [Nm]; other embodiments are conceivable. The loads which are applied by means of a bolt in the screw hole 17 are transmitted via the carrying plate 12. The outer circumference 36 of the screw hole 17 serves in this case to position and to guide the spring 15 from Fig. 1a.

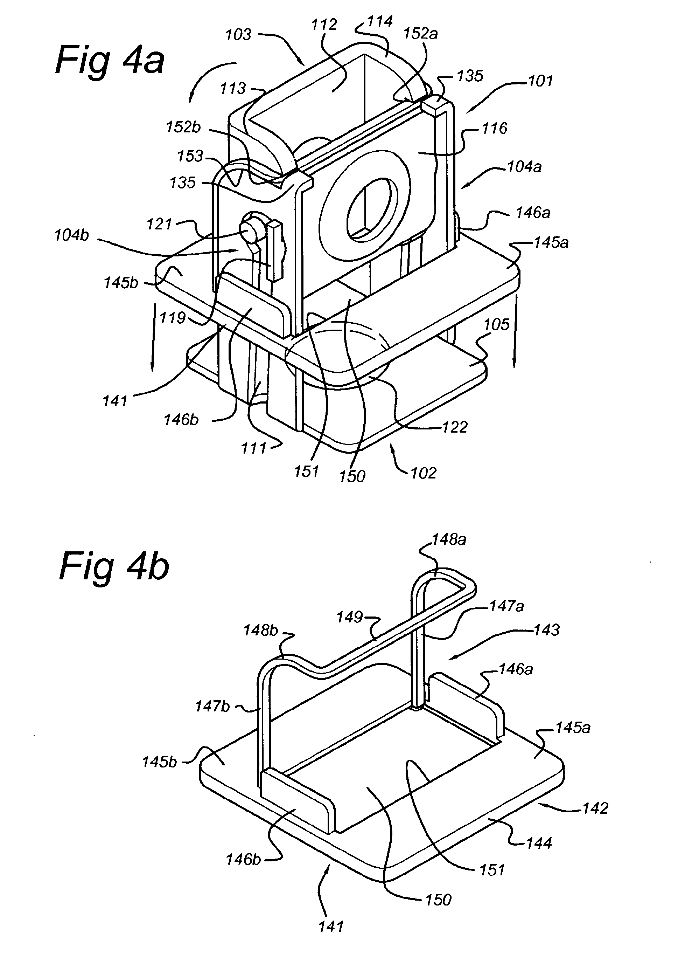

Fig. 4a shows a further example of a fastening device 101, not covered by the claims. Fig. 4b shows an operating device 141 of the fastening device 101 from Fig. 4a. The following description of Fig. 4a and 4b focuses on the differences from the embodiment from Fig. 1 - 3. Where necessary, like parts are referred to using the same reference numeral increased by 100. The fastening device 101 is provided with an operating device 141. This operating device 141 operates the fastening device 101, specifically the fastening means 103, for movement thereof with respect to the frame 102. The operating device 141 has a frame plate 142 which extends, when combined with the fastening device 101, along the base plate 105. The outer circumference 144 of the frame plate 142 is in this case the same shape as the base plate 105; other shapes are also conceivable. The frame plate 142 is provided with a recess 150 for feeding therethrough the uprights 104a and 104b with the fastening means 103. The circumference 151 of the recess 150 connects in this case to the outer circumference of the uprights 104a and 104b with the fastening means 103. Along the circumference 151 and close to the uprights 104a and 104b, the frame plate 142 is provided with reinforcement ribs 146a and 146b for reinforcing the frame plate 142 close to the recess 150 and for guiding the operating device 141 along the uprights 104a and 104b. The frame plate 142 is provided with a stop surface 145a for driving the operating device 141. The frame plate 142 is in this case provided with two stop surfaces 145a and 145b on both sides of the uprights 104a and 104b with the fastening means 103 for uniformly driving the operating device 141. The operating device 141 is drivably held by the uprights 104a and 104b between a first stance (Fig. 4a) and a second stance. In the first stance of the operating device 141, the frame plate 142 is set apart from the base plate 105 and wherein preferably the fastening means 103 extends in the recess 150 for holding the fastening means 103 in the introduction stance; this is advantageous for example during transportation of the fastening device 101. The circumference 151 of the recess 150 connects in this case with prestress to the outer circumference of the uprights 104a and 104b with the fastening means 103 for holding the fastening means in an improved manner in the first stance. In the second stance of the operating device 141, the frame plate 142 abuts on the base plate 105 and is clamped thereon by the fastening means 103 which in the meantime has tilted toward the fastening stance. The operating device 141 comprises an operating arm 143 which acts on the fastening means 103 for operating thereof between the introduction stance and the fastening stance. The operating arm 143 extends from the frame plate 142 for acting on the fastening means 103. The operating arm 143 reaches by means of an upright 147a, 147b from the operating arm 143, in this case two uprights 147a and 147b of the operating arm 143, up to the upper side of the fastening means 103. The two uprights 147a and 147b of the operating arm 143 are connected to each other by a transverse connection 149 close to the upper side of the fastening means 103. The operating arm 143 acts, when the operating device 141 is in the first stance, by means of the transverse connection 149 on the fastening means 103 for operating thereof from the introduction stance to the fastening stance. The fastening means 103 is provided with a recess 152a, 152b, in this case two recesses 152a and 152b. The transverse connection 149 falls into a recess 152a, 152b, in this case into both recesses 152a and 152b, for acting on the fastening means 103.

In the first stance of the operating device 141, the two uprights 147a and 147b of the operating device 141 abut on the uprights 104a and 104b of the frame 102, the respective bend pieces 148a and 148b being formed therewith. The operating device 141 is preferably made of a flexible plastics material for partly deforming the uprights 147a and 147b in the bend pieces 148a and 148b; other materials or combinations of materials are also conceivable.

The operating device 141 functions as follows. To begin with, the operating device 141 is in the first stance (Fig. 4a). Subsequently, the fastening device 101 is brought within, for example, a chassis beam 37 through a recess in a bottom wall part 38 (see Fig. 2a and 2b). Therewith, the two stop surfaces 145a and 145b act on the bottom wall part 38 for driving the operating device 141 from the first stance to the second stance. The frame plate 141 moves in the direction of the base plate 105 and, in the process, the operating arm 143 tilts the fastening means 103 from the introduction stance to the fastening stance. In this fastening stance, the frame plate 141 is clamped between the base plate 105 and the carrying plate 112 of the fastening means 103.

In this example, the hook or crest 119 is a T-shaped piece for improved guidance of the fastening means 103 with the closing plate 116 with respect to the uprights 104a and 104b of the frame 102.

In this example, the slot 11 extends at an angle to a respective upright 104a, 104b. This facilitates the tilting of the fastening means 103 as a result of the fact that a more scissor-like movement of a leg 113, 114 with an upright 104a, 104b prevents mutual striking. Furthermore, the fact that the slot 11 extends at an angle to a respective upright 104a, 104b allows the fastening means 103 to be aligned with the uprights 104a and 104b in such a way that the fastening means 103 is located, in the introduction stance, as far as possible between the uprights 104a and 104b, as a result of which introduction into a recess 10 from Fig. 2a is further facilitated.

It will be clear that the purpose of the foregoing description is to illustrate the functioning of preferred embodiments of the invention, and not to limit the scope of the invention. Starting from the foregoing discussion, a person skilled in the art will immediately think of many variations which fall within the scope of the present invention, as defined by the claims.

## Claims

1. Fastening device (1) for providing a wall part of a carrying beam, such as a chassis beam, with an internal screw thread in order to fasten-in a bolt, wherein the fastening device (1) comprises:
- a frame (2), the frame (2) comprising a base plate (5) provided with a recess (22) for feeding-through a bolt, and an upright (4a, 4b) extending from the base plate (5),
- a fastening means (3) comprising a carrying plate (12) provided with a screw hole (17) having a screw axis, the fastening means (3) being movably connected to the frame (2) by means of the upright (4a, 4b),
the parallel projection of the fastening means (3) along the screw axis of the screw hole (17) being greater than the parallel projection of the fastening means (3) in a direction perpendicular to the screw axis, wherein the fastening means is movable between a first position remote from the recess (22) and a second position close to the recess (22), and between an introduction stance for feeding the fastening means (3) through a slitted hole in a wall part of a carrying beam and past the wall part, and a fastening stance, wherein, in the fastening stance, the screw hole (17) faces the recess (22) in the base plate (5) for fastening a bolt in the screw hole (17) and the carrying plate (12) faces the base plate (5) for receiving and clamping a wall part of a carrying beam between the carrying plate (12) and the base plate (5), **characterized in, that** the fastening means (3) comprises a spring (15) for bracing the fastening means (3) in the first position in a desired stance, wherein the spring (15) has a line of action and the spring is connected to the fastening means (3) in such a way that the line of action tilts along with the fastening means (3) around the tilt axis (32) in order to brace the fastening means in the fastening stance.

2. Fastening device according to Claim 1, wherein the height of the fastening means (3) is less than the length of the fastening means (3).

3. Fastening device according to a preceding claim, wherein the carrying plate (12) comprises a supporting surface for acting on a wall part of a carrying beam, such as a chassis beam, the supporting surface extending perpendicularly from the screw axis over a length which is greater than the height (h) of the fastening means (3).

4. Fastening device (1) according to Claim 1, wherein the fastening means (3) is tiltable about a tilt axis (32) between the introduction stance and the fastening stance.

5. Fastening device (1) according to Claim 4, wherein the fastening means (3) is tiltable, in the first position, between the introduction stance and the fastening stance.

6. Fastening device (1) according to a Claim 4-5, wherein the tilt axis (32) lies substantially perpendicularly to the screw axis of the screw hole (17).

7. Fastening device (1) according to a Claim 1, 5 or 6, wherein the introduction stance is substantially perpendicular to the fastening stance.

8. Fastening device (1) according to Claim 1, wherein the screw axis of the screw hole (17) extends substantially perpendicularly to the longitudinal direction of the carrying plate (12) and wherein the fastening means (3) is movable between an introduction stance and a fastening stance, wherein, in the introduction stance, the fastening means (3) extends substantially perpendicularly to the base plate (5) for feeding the fastening means (3) through a recess, such as a slitted hole, in a wall part of a carrying beam and past the wall part and wherein, in the fastening stance, the fastening means (3) extends substantially parallel to the base plate (5) for receiving and clamping a wall part of a carrying beam between the carrying plate (12) and the base plate (5) and wherein, in the fastening stance, the screw hole (17) faces the recess (22) in the base plate (5) for fastening a bolt in the screw hole (17).

9. Fastening device according to a preceding claim, wherein the line of action of the spring (15) substantially coincides with the screw axis of the screw hole (17).

10. Fastening device according to a preceding claim, provided with an operating device (141) for moving the fastening means (103).

11. Accessory, in particular a footboard or a decorative bar, provided with a fastening device (1) according to a preceding claim, for fastening the accessory to a vehicle.

12. Method for manufacturing a fastening device according to a preceding claim, wherein the method includes:
- moving the fastening means (3) from the second position close to the recess (22) in the base plate (5) to the first position remote from the recess (22) and afterwards
- tilting the fastening means (3) about the tilt axis (32) from the fastening stance to the introduction stance.

## Patentansprüche

1. Befestigungsvorrichtung (1) zum Bereitstellen eines Wandabschnitts eines Trägers, beispielsweise eines Fahrgestellträgers, mit einem inneren Schraubengewinde, um eine Schraube darin zu befestigen, wobei die Befestigungsvorrichtung (1) aufweist:
- einen Rahmen (2), wobei der Rahmen (2) eine Basisplatte (5), die mit einer Aussparung (22) zum Hindurchführen einer Schraube versehen ist, und einen sich von der Basisplatte (5) aus erstreckenden Ständer (4a,4b) aufweist,
- Befestigungsmittel (3) mit einer Halteplatte (12), die mit einem Gewindeloch (17), das eine Gewindeachse hat, versehen ist, wobei das Befestigungsmittel (3) mit Hilfe des Ständers (4a,4b) beweglich mit dem Rahmen (2) verbunden ist,
wobei die parallele Projektion des Befestigungsmittels (3) entlang der Gewindeachse des Gewindelochs (17) größer ist als die parallele Projektion des Befestigungsmittels (3) in eine zur Gewindeachse senkrechte Richtung, wobei das Befestigungsmittel bewegbar ist zwischen einer ersten Position fern von der Aussparung (22) und einer zweiten Position nahe an der Aussparung (22) und zwischen einer Einführungsstellung zum Führen des Befestigungsmittels (3) durch ein Schlitzloch in einem Wandabschnitt eines Trägers und hinter den Wandabschnitt und einer Befestigungsstellung, wobei in der Befestigungsstellung das Gewindeloch (17) gegenüber der Aussparung (22) in der Basisplatte (5) angeordnet ist, um eine Schraube in dem Gewindeloch (17) zu befestigen, und die Halteplatte (12) der Basisplatte (5) zugewandt ist, um zwischen der Halteplatte (12) und der Basisplatte (5) einen Wandabschnitt eines Trägers aufzunehmen und zu klemmen,
**dadurch gekennzeichnet, dass** das Befestigungsmittel (3) eine Feder (15) aufweist, um das Befestigungsmittel (3) in der ersten Position in einer gewünschten Stellung zu verankern, wobei die Feder (15) eine Wirklinie hat und die Feder mit dem Befestigungsmittel (3) derart verbunden ist, dass die Wirklinie zusammen mit dem Befestigungsmittel (3) um die Kippachse (32) kippt, um das Befestigungsmittel in der Befestigungsstellung zu verankern.

2. Befestigungsvorrichtung nach Anspruch 1, wobei die Höhe des Befestigungsmittels (3) kleiner ist als die Länge des Befestigungsmittels (3).

3. Befestigungsvorrichtung nach einem der vorstehenden Ansprüche, wobei die Halteplatte (12) eine Stützfläche aufweist, um auf einen Wandabschnitt eines Trägers, beispielsweise eines Fahrgestellträgers, zu wirken, wobei sich die Stützfläche senkrecht zur Gewindeachse über eine Länge erstreckt, die größer ist als die Höhe (h) des Befestigungsmittels (3).

4. Befestigungsvorrichtung (1) nach Anspruch 1, wobei das Befestigungsmittel (3) zwischen der Einführungsstellung und der Befestigungsstellung um eine Kippachse (32) kippbar ist.

5. Befestigungsvorrichtung (1) nach Anspruch 4, wobei das Befestigungsmittel (3) in der ersten Position zwischen der Einführungsstellung und der Befestigungsstellung kippbar ist.

6. Befestigungsvorrichtung (1) nach Anspruch 4 oder 5, wobei die Kippachse (32) im Wesentlich senkrecht zur Gewindeachse des Gewindelochs (17) angeordnet ist.

7. Befestigungsvorrichtung (1) nach Anspruch 1, 5 oder 6, wobei die Einführungsstellung im Wesentlichen senkrecht zur Befestigungsstellung ist.

8. Befestigungsvorrichtung (1) nach Anspruch 1, wobei sich die Gewindeachse des Gewindelochs (17) im Wesentlichen senkrecht zur Längsrichtung der Halteplatte (12) erstreckt und wobei das Befestigungsmittel (3) zwischen einer Einführungsstellung und einer Befestigungsstellung bewegbar ist, wobei sich in der Einführungsstellung das Befestigungsmittel (3) im Wesentlichen senkrecht zur Basisplatte (5) erstreckt, um das Befestigungsmittel (3) durch eine Aussparung, beispielsweise ein Schlitzloch, in einem Wandabschnitt eines Trägers und hinter den Wandabschnitt zu führen, und wobei sich in der Befestigungsstellung das Befestigungsmittel (3) im Wesentlichen parallel zur Basisplatte (5) erstreckt, um einen Wandabschnitt eines Trägers zwischen der Halteplatte (12) und der Basisplatte (5) aufzunehmen und zu klemmen, und wobei in der Befestigungsstellung das Gewindeloch (17) der Aussparung (22) in der Basisplatte (5) zugewandt ist, um eine Schraube in dem Gewindeloch (17) zu befestigen.

9. Befestigungsvorrichtung nach einem der vorstehenden Ansprüche, wobei die Wirklinie der Feder (15) im Wesentlichen mit der Gewindeachse des Gewindelochs (17) übereinstimmt.

10. Befestigungsvorrichtung nach einem der vorstehenden Ansprüche, die mit einer Betätigungsvorrichtung (141) zum Bewegen des Befestigungsmittels (103) versehen ist.

11. Zubehörteil insbesondere ein Trittbrett oder eine Zierleiste, versehen mit einer Befestigungsvorrichtung (1) nach einem der vorstehenden Ansprüche, um das Zubehörteil an einem Fahrzeug zu befestigen.

12. Verfahren zur Herstellung einer Befestigungsvorrichtung nach einem der vorstehenden Ansprüche, wobei das Verfahren aufweist:
- Bewegen des Befestigungsmittels (3) aus der zweiten Position nahe an der Aussparung (22) in der Basisplatte (5) in die erste Position fern von der Aussparung (22) und danach
- Kippen des Befestigungsmittels (3) um die Kippachse (32) aus der Befestigungsstellung in die Einführungsstellung.

## Revendications

1. Dispositif de fixation (1) permettant de doter une partie de paroi d'une poutre portante, telle qu'une poutre de châssis, d'un filetage de vis interne dans le but de fixer un boulon, le dispositif de fixation comprenant :
- un cadre (2), le cadre (2) comprenant une plaque de base (5) munie d'un évidemment (22) pour le passage d'un boulon, et un montant droit (4a, 4b) s'étendant à partir de la plaque de base (5),
- un moyen de fixation (3), comprenant une plaque de support (12) munie d'un trou de vis (17), présentant un axe de vis, le moyen de fixation (3) étant relié de façon mobile au cadre (2) par le montant (4a, 4b), la projection parallèle du moyen de fixation (3) le long de l'axe de vis du trou de vis (17) étant plus grande que la projection parallèle du moyen de fixation (3) dans une direction perpendiculaire à l'axe de vis (17), dans lequel le moyen de fixation est mobile entre une première position éloignée de l'évidemment (22) et une seconde position voisine de l'évidemment (22), et entre une position d'introduction pour introduire le moyen de fixation (3) à travers une rainure de la partie de la paroi de la poutre de support et au-delà de la paroi, et une position de maintien, dans lequel, dans la position de maintien, le trou de vis (17) est en regard de l'évidemment (22) dans la plaque de base (5) pour immobiliser un boulon dans le trou de vis (17), et la plaque de support (12) est en regard de la plaque de base (5) pour recevoir et serrer une partie de paroi d'une poutre de soutien entre la plaque de support (12) et la plaque de base (5),
**caractérisé en ce que** le moyen de fixation (3), comprend un ressort (15) pour maintenir le moyen de fixation (3) dans la première position, dans une position désirée, dans lequel le ressort (15) possède une ligne d'action, le ressort étant relié au moyen de fixation (3), de telle sorte que la ligne d'action s'incline avec le moyen de fixation (3) autour de l'axe d'inclinaison (32), de manière à maintenir ce moyen de fixation dans la position de fixation.

2. Dispositif de fixation selon la revendication 1, dans lequel la hauteur du moyen de fixation (3) est inférieure à la longueur du dispositif de fixation (3) .

3. Dispositif de fixation selon l'une des revendications précédentes, dans lequel la plaque de support (12) comprend une surface de support propre à agir sur une partie de la paroi de la poutre de soutien, telle qu'une poutre d'un châssis, la surface de support s'étendant perpendiculairement depuis l'axe de la vis sur une longueur qui est supérieure à la hauteur (h) du moyen de fixation (3).

4. Dispositif de fixation (1) selon la revendication 1, dans lequel le moyen de fixation (3) est apte à s'incliner autour d'un axe d'inclinaison (32) entre la position d'introduction et la position de fixation.

5. Dispositif de fixation (1) selon la revendication 4, dans lequel le moyen de fixation (3) est apte à s'incliner, dans la première position, entre la position d'introduction et la position de fixation.

6. Dispositif de fixation (1) selon la revendication 4 ou 5, dans lequel l'axe d'inclinaison (32) est substantiellement perpendiculaire à l'axe de la vis du trou de vis (17).

7. Dispositif de fixation (1) selon l'une des revendications 1, 5 ou 6, dans lequel la position d'introduction est substantiellement perpendiculaire à la position de fixation.

8. Dispositif de fixation (1) selon la revendication 1, dans lequel l'axe de la vis du trou de vis (17) s'étend substantiellement perpendiculairement à la direction longitudinale de la plaque de support (12), et dans lequel le moyen de fixation (3) est mobile entre la position d'introduction et la position de fixation, dans lequel, dans la position d'introduction, le moyen de fixation (3) s'étend substantiellement perpendiculairement à la plaque de base (5) pour introduire le moyen de fixation (3) à travers un évidemment, tel qu'une rainure, dans une partie de paroi de la poutre de soutien et au-delà de la paroi, et dans lequel, dans la position de fixation, le moyen de fixation (3) s'étend substantiellement parallèlement à la plaque de base (5) pour recevoir et serrer une partie de paroi de la poutre de soutien entre la plaque de support (12) et la plaque de base (5), et dans lequel, dans la position de fixation, le trou de vis (17) est en regard de l'évidemment (22) dans la plaque de base (5), pour fixer un écrou dans ce trou de vis (17).

9. Dispositif de fixation selon l'une des revendications précédentes, dans lequel la ligne d'effet du ressort (15) coïncide substantiellement avec l'axe de la vis du trou de vis (17).

10. Dispositif de fixation selon l'une quelconque des revendications précédentes, muni d'un mécanisme de commande (141) pour déplacer le moyen de fixation (103).

11. Accessoire, en particulier une plaque de pied ou une barre décorative, munie d'un dispositif de fixation (1) selon l'une quelconque des revendications précédentes, pour fixer l'accessoire à un véhicule.

12. Méthode de fabrication d'un dispositif de fixation selon l'une des revendications précédentes, dans laquelle la méthode inclus :
- le déplacement du moyen de fixation (3) de la seconde position voisine de l'évidemment (22) dans la plaque de base (5) jusqu'à la première position éloignée de l'évidemment (22) et, après quoi,
- l'inclinaison du moyen de fixation (3) autour de l'axe d'inclinaison (32), de la position de fixation à la position d'introduction.
